# EUROPEAN PATENT APPLICATION

(11) **EP 4 786 043 A1**
(43) Date of publication of application: **05.08.2026**
(21) Application number: 24891299.0
(22) Date of filing: 06.11.2024
(51) Int. Cl.: B01J 20/20, B01J 20/28, B01J 20/30, C01B 32/30, C01B 32/354, C02F 1/28

(54) **ACTIVATED CARBON, ADSORPTION FILTER INCLUDING SAME, WATER PURIFIER, AND METHOD FOR PRODUCING ACTIVATED CARBON**

(30) Priority: 14.11.2023 JP 2023193657
(71) Applicant: Kuraray Co., Ltd., Kurashiki-shi, Okayama 710-0801 (JP)
(72) Inventor: NAKADA, Haruo, Tokyo 100-0004 (JP); KARINO, Yuka, Kurashiki-shi, Okayama 710-0801 (JP); IWASAKI, Hideharu, Osaka-shi, Osaka 530-8611 (JP)
(74) Representative: Müller-Boré & Partner Patentanwälte PartG mbB
(86) International application number: PCT/JP2024/039426
(87) International publication number: WO 2025/105261

(57) **Abstract**

One aspect of the present invention relates to activated carbon having a BET specific surface area of 500 m²/g or more, wherein in solid-state 19F-NMR measurement on the activated carbon, a peak derived from 19F is observed between -100 and -120 ppm.

## Description

### Technical Field

The present invention relates to activated carbon, an adsorption filter including the activated carbon, a water purifier, and a method for producing activated carbon. In particular, the present invention relates to activated carbon to be used for water treatment to remove a perfluoroalkyl compound and a polyfluoroalkyl compound contained in water.

### Background Art

Fluorine containing organic compounds have unique properties (excellent in heat resistance and chemical resistance, usable even under severe conditions, having no light absorbing ability, etc.) that cannot be achieved by other substances, and thus have been used in various applications such as surfactants, emulsifiers, water repellents, fire extinguishants, waxes, carpet cleaning agents, and coating agents. Recently, fluorine containing organic compounds are often used as functional materials such as surface treatment agents for semiconductors or fuel cell constituent materials.

However, it has been reported for several years, mainly by researchers in the United States and Canada, that some fluorine containing organic compounds have accumulated in environmental water and in wildlife bodies. Typical examples thereof are perfluorocarboxylic acids typified by perfluorooctanoic acid (PFOA: C₇F₁₅COOH) and perfluorosulfonic acids typified by perfluorooctanesulfonic acid (PFOS: C₈F₁₇SO₃H). After that, researchers in Europe and Japan also entered the environmental analysis research, and as a result, it was revealed that these compounds exist in the environment on a global scale including Japan. In response to such a situation, efforts have started to reduce the environmental risk of fluorine containing organic compounds (PFCs).

Patent Literature 1 discloses a method for recovering PFOA using granular activated carbon. Perfluoroalkyl compounds have a completely fluorinated linear alkyl group, and examples thereof include perfluorooctanoic acid (PFOA) (IUPAC name: 2,2,3,3,4,4,5,5,6,6,7,7,8,8,8-pentadecafluorooctanoic acid) and perfluorooctanesulfonic acid (PFOS) as shown in the following chemical formulas.

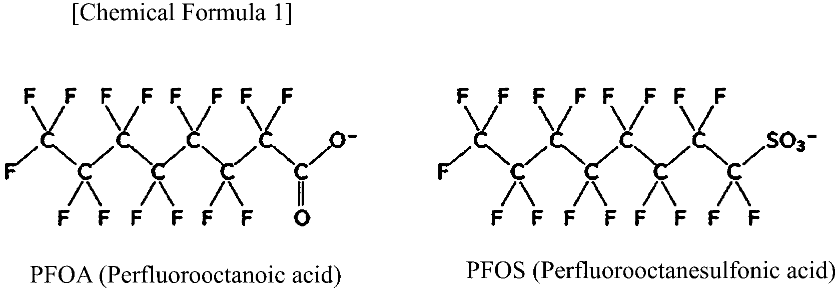

However, a method using activated carbon in a treatment of PFOA and the like as in Patent Literature 1 has a great economic advantage, but the treatment efficiency is not satisfactory in the conventional technique.

Therefore, in view of the above current situation, a main object of the present invention is to provide activated carbon capable of efficiently removing fluorine containing organic compounds, and an adsorption filter and a water purifier for treating water containing fluorine containing organic compounds using the activated carbon.

### Citation List

### Patent Literature

Patent Literature 1: US 2005/0000904 A

### Summary of Invention

As a result of intensive studies to solve the above challenge, the present inventors have found that the above challenge can be solved by activated carbon having the following configuration, and have accomplished the present invention by further conducting studies based on that finding.

That is, the activated carbon according to the first aspect of the present invention is characterized in that the activated carbon has a BET specific surface area of 500 m²/g or more, and in solid-state ¹⁹F-NMR measurement thereon, a peak derived from ¹⁹F is observed between - 100 and -120 ppm.

### Brief Description of Drawings

[Fig. 1] Fig. 1 shows measurement results of ¹⁹F-NMR of the activated carbons obtained in Examples.
[Fig. 2] Fig. 2 is a graph for comparison showing the effect of removing perfluorooctanoic acid (PFOA) on the activated carbons of Example 1, Example 3, and Comparative Example 1.
[Fig. 3] Fig. 3 is a graph for comparison showing the effect of removing perfluorooctanoic acid (PFOA) on the activated carbons of Example 2 and Comparative Example 2.

### Description of Embodiments

Hereinafter, an embodiment of the present invention will be specifically described, but the present invention is not limited thereto.

### (Activated carbon)

The activated carbon of the present embodiment is characterized in that the activated carbon has a BET specific surface area of 500 m²/g or more, and in solid-state ¹⁹F-NMR measurement on the activated carbon, a peak derived from ¹⁹F is observed between -100 and - 120 ppm.

According to the above configuration, it is possible to provide activated carbon capable of efficiently removing fluorine containing organic compounds, and an adsorption filter and a water purifier including the activated carbon for treating water containing fluorine containing organic compounds.

Activated carbon has a small amount of functional groups with respect to its specific surface area, and is generally known as a hydrophobic substance in water. On the other hand, the perfluoroalkyl compound and the polyfluoroalkyl compound have an amphiphilic property having a hydrophobic group derived from a C-F bond and a hydrophilic group such as a carboxylic acid or a sulfonic acid. Activated carbon, which is a hydrophobic substance, is said to adsorb a perfluoroalkyl compound and/or a polyfluoroalkyl compound to pores or the like thereof, and the adsorption factor is considered to be a hydrophobic interaction.

The activated carbon of the present embodiment is merely required to have a specific surface area of at least 500 m²/g or more. The specific surface area is derived from the fact that activated carbon forms pores for adsorbing a substance, and when the activated carbon has a specific surface area of 500 m²/g or more, an area wide enough for adsorption of a substance can be secured. On the other hand, the upper limit value of the specific surface area is not particularly limited, but an excessively large specific surface area is not preferable because the mechanical strength of the activated carbon decreases. From the viewpoint of more effectively thermally decomposing the adsorbed perfluoroalkyl compound and/or polyfluoroalkyl compound and controlling a decrease in mechanical strength, the specific surface area is preferably in the range of 600 to 3500 m²/g, and more preferably 750 to 2500 m²/g. Specifically, the specific surface area may be 500 m²/g, 750 m²/g, 1000 m²/g, 1250 m²/g, 1500 m²/g, 1750 m²/g, 2000 m²/g, 2250 m²/g, 2500 m²/g, 2750 m²/g, 3000 m²/g, 3250 m²/g, 3500 m²/g, or the like.

In the present embodiment, the BET specific surface area means a specific surface area calculated by a nitrogen adsorption method, and is a value measured by the method described in Examples described later.

The present inventors have considered that owing to the affinity with a perfluoroalkyl compound and/or a polyfluoroalkyl compound each having a C-F bond in addition to the specific surface area, adsorption proceeds more effectively when fluorine derived from a C-F bond is present on activated carbon. On the basis of the findings, carbon for adsorbing a perfluoroalkyl compound and/or a polyfluoroalkyl compound will be described.

On the activated carbon of the present embodiment, a peak derived from ¹⁹F is observed between -100 and -120 ppm in solid ¹⁹F-NMR measurement. For the solid-state ¹⁹F-NMR measurement, any measurement using an NMR apparatus capable of acquiring an NMR spectrum of a solid sample by a nuclear magnetic resonance (NMR) method can be employed without particular limitation. For example, measurement can be conducted using the apparatus used in Examples described later, or the like.

Since the activated carbon on which the peak is observed as described above contains fluorine, it is considered that the activated carbon has high affinity with the perfluoroalkyl compound and/or the polyfluoroalkyl compound.

The peak derived from ¹⁹F in the solid-state ¹⁹F-NMR measurement is preferably a peak derived from fluorine bonded to activated carbon. Accordingly, it is considered that since fluorine derived from a C-F bond exists in the activated carbon, affinity with the perfluoroalkyl compound and/or the polyfluoroalkyl compound having a C-F bond is further enhanced, and adsorption between the activated carbon of the present embodiment and the perfluoroalkyl compound and/or the polyfluoroalkyl compound proceeds more efficiently.

The fluorine content based on 100% by weight of the activated carbon of the present embodiment is preferably 0.0001% by weight or more. As to the fluorination content of the activated carbon, the adsorption function can be improved with the presence of fluorine in an extremely small amount. A preferred fluorine content may be 0.0001 to 5% by weight, 0.0001 to 3% by weight, 0.0001 to 2% by weight, 0.001 to 1.5% by weight, 0.001 to 1% by weight, 0.001 to 0.2% by weight, 0.005 to 0.15% by weight, or 0.01 to 0.1% by weight based on 100% by weight of the activated carbon. Specifically, the preferred fluorine content may be 0.0001% by weight, 0.0005% by weight, 0.001% by weight, 0.002% by weight, 0.005% by weight, 0.01% by weight, 0.05% by weight, 0.1% by weight, 0.5% by weight, 1% by weight, 1.5% by weight, 2% by weight, or the like.

In the present embodiment, the activated carbon may be any one selected from powdery activated carbon, fibrous activated carbon, granular activated carbon, and pellet-like activated carbon. Fibrous activated carbon is activated carbon obtained by carbonizing and activating appropriate fibers, and examples thereof include phenol resin-based fibrous activated carbon, acrylic resin-based fibrous activated carbon, cellulose-based fibrous activated carbon, and coal pitch-based fibrous activated carbon. The fiber length, the cross-sectional diameter, and the like are appropriately determined.

Examples of the raw material of the granular activated carbon include raw materials such as wood (waste wood, thinned wood, sawdust), coffee grounds, chaffs, coconut husks, bark, and fruits. These natural-origin raw materials are carbonized and activated to easily develop pores. In addition, since those raw materials are waste for secondary use, they can be procured at low cost. Besides, tires, petroleum pitch, fired products derived from synthetic resins such as urethane resin and phenol resin, coal, and the like can also be used as a raw material.

Among them, the activated carbon of the present embodiment is preferably activated carbon in a powder form, a granular form, or a pellet-like form.

The powdery activated carbon and the pellet-like activated carbon can be produced by pulverizing or molding the fibrous or granular activated carbon described above.

### (Method for producing activated carbon)

The activated carbon of the present embodiment can be obtained, for example, by subjecting an activated carbon raw material as described above to an activation treatment; allowing the activated carbon raw material (activated carbon serving as a base) subjected to the activation treatment to adsorb a fluorine containing compound; and subsequently heat-treating the activated carbon with the fluorine containing compound attached at a temperature equal to or higher than a decomposition onset temperature of the fluorine containing compound.

The activated carbon raw material is heated and carbonized in a temperature range of 200°C to 600°C, as necessary, whereby micropores are formed while carbon fixation proceeds. When carbonization is required, the carbonization is usually conducted with oxygen or air shut off.

Subsequently, the activated carbon raw material is subjected to an activation treatment by being exposed to water vapor, carbon dioxide gas, and a mixed gas thereof in a temperature range of 600°C to 1200°C. As a result, activated carbon with various pores developed is obtained. In consideration of safety and reactivity, it is preferable to use a water-vapor-containing gas containing 10 to 40% by volume of water vapor as an activation gas. The activation time and the temperature raising rate are not particularly limited, and can be appropriately selected according to the type, shape, and size of the carbonaceous material to be selected. At the time of activation, a chemical activation (chemical activation) method or the like by adding potassium hydroxide or zinc chloride and conducting a heat treatment may be used besides the gas activation method, or the gas activation and the chemical activation may be conducted in combination. In addition, sequential washing is also conducted.

In the present embodiment, the method for obtaining activated carbon on which a peak derived from ¹⁹F is observed in -100 to -120 ppm in solid-state ¹⁹F-NMR measurement is not particularly limited, and the activated carbon can be produced by activating a fluorine containing resin (activated carbon raw material), or can be produced by activating an activated carbon raw material, then adding a fluorine compound to the resulting activated carbon serving as a base, so that the fluorine compound is absorbed by the activated carbon, and reacting the activated carbon serving as a base with the fluorine compound.

In the present embodiment, examples of a fluorine containing resin that can be used include polytetrafluoroethylene, perfluoroalkoxyalkane, an ethylene-tetrafluoroethylene copolymer, a perfluoroethylene-propene copolymer, polyvinylidene fluoride, polychlorotrifluoroethylene, and an ethylene-chlorotrifluoroethylene copolymer.

In a preferred embodiment, the target activated carbon is produced by adding a fluorine compound to activated carbon serving as a base and that is obtained by activating an activated carbon raw material, allowing the activated carbon to adsorb the fluorine compound to form activated carbon with a fluorine containing compound attached, and reacting the activated carbon serving as a base with the fluorine compound. The method for reacting the activated carbon serving as a base with the fluorine compound is not particularly limited, and examples thereof include a method in which hydrogen of the activated carbon serving as a base is replaced with a metal and reacted with the fluorine compound, a method in which the fluorine compound is heated together with the activated carbon serving as a base and the activated carbon is fluorinated by thermally generated radicals, and a method in which the activated carbon serving as a base is directly reacted with hydrogen fluoride. In consideration of versatility of the method, the method of heating a fluorine compound together with activated carbon serving as a base is preferable.

The fluorine compound to be adsorbed on the activated carbon serving as a base is not particularly limited, and examples thereof include inorganic fluorides, such as sodium fluoride, potassium fluoride, lithium fluoride, calcium fluoride, magnesium fluoride, iron fluoride, copper fluoride and nickel fluoride; and compounds and derivatives thereof such as salts, including perfluorobutane, perfluoropentane, perfluorohexane, perfluoroheptane, perfluorooctane, perfluorononane, perfluorodecane, perfluoroundecane, perfluorododecane, perfluorotridecane, perfluorotetradecane, perfluorobutanoic acid, perfluoropentanoic acid, perfluorohexanoic acid, perfluoroheptanoic acid, perfluorooctanoic acid, perfluoronanoic acid, perfluorodecanoic acid, perfluoroundecanoic acid, perfluorododecanoic acid, perfluorotridecanoic acid, perfluorotetradecanoic acid, perfluorobutanesulfonic acid salts, perfluoropentanesulfonic acid salts, perfluorohexanesulfonic acid salts, perfluoroheptanesulfonic acid salts, perfluorooctanesulfonic acid salts, perfluorononanesulfonic acid salts, perfluorodecanesulfonic acid salts, 1H,1H,2H,2H-perfluorohexanesulfonic acid, 1H,1H,2H,2H-perfluorooctanesulfonic acid, 1H,1H,2H,2H-perfluorodecanesulfonic acid, perfluorooctanesulfonamide, N-methylperfluorooctanesulfonamide, N-ethylperfluorooctanesulfonamide, N-methylperfluorooctanesulfonamide acetic acid, N-ethylperfluorooctanesulfonamide acetic acid, N-methylperfluorooctanesulfonamide ethanol, N-ethylperfluorooctanesulfonamide ethanol, hexafluoropropylene oxide dimer acid, 4,8-dioxa-3H-perfluoronanoic acid, perfluoro-3-methoxypropanoic acid, perfluoro-4-methoxybutanoic acid, nonafluoro-3,6-dioxaheptanoic acid, 9-chlorohexadecafluoro-3-oxanonane-1-sulfonic acid, 11-chloroeicosafluoro-3-oxaundecane-1-sulfonic acid, perfluoro(2-ethoxyethane)sulfonic acid, 3-perfluoropropylpropanoic acid, 2H,2H,3H,3H-perfluorooctanoic acid, 3-perfluoroheptylpropanoic acid, and bis(1H,1H,2H,2H-perfluorodecyl) phosphate. These may be used singly, or two or more of them may be mixed for use.

Furthermore, a fluorine containing high-molecular-weight compound may also be used. The high-molecular-weight compound to be used is not particularly limited, and polytetrafluoroethylene, perfluoroalkoxyalkane, an ethylene-tetrafluoroethylene copolymer, a perfluoroethylene-propene copolymer, polyvinylidene fluoride, polychlorotrifluoroethylene, an ethylene-chlorotrifluoroethylene copolymer, and the like can be used. These may be used singly, or two or more of them may be mixed for use.

The amount of the fluorine compound to be added to the activated carbon serving as a base is not particularly limited, but since the degree of fluorination varies depending on the amount of the fluorine compound added, an amount that is large to some extent is preferable because fluorinated activated carbon can be more efficiently fluorinated. On the other hand, an excessively large amount is not preferable because an excess portion is not used for fluorination and volatilizes, and thus there is a risk that highly reactive fluorine leaks to the outside of the system. Therefore, the amount of the fluorine compound to be added to the activated carbon is in the range of 0.01 ppm to 100% by weight, more preferably in the range of 0.1 ppm to 10% by weight, and still more preferably in the range of 0.2 ppm to 8% by weight based on 100% by weight of the activated carbon serving as a base to be used.

In the production method of the present embodiment, the condition for fluorination is not particularly limited, and thermal or radical decomposition methods and the like can be used as long as the fluorine containing compound added to the activated carbon is decomposed to generate a fluorine anion and a fluorine radical. That is, it is preferable to use a method of heating activated carbon together with a fluorine containing compound to the decomposition temperature of the fluorine containing compound, or a method of irradiating activated carbon and a fluorine containing compound with ultraviolet rays, electron beams, or the like. In view of using no special equipment, it is preferable to use a thermal method, namely, a heat treatment.

In the present embodiment, when a heat treatment is conducted, it is preferable to conduct the heat treatment at a temperature equal to or higher than the temperature at which the fluorine containing compound is decomposed as described above. The heating temperature is preferably 200 to 2000°C, more preferably 300 to 1800°C, and still more preferably 400 to 1500°C. When the temperature exceeds 2000°C, the reaction of the generated reactive fluorine compound with activated carbon may be unlikely to occur.

In the present embodiment, it is preferable to conduct the heat treatment under a situation where carbon is not burned and consumed. That is, it is preferable to conduct the heat treatment in the absence of oxygen. The absence is intended to mean an atmosphere in which substantially no carbon is consumed through oxidation and combustion by oxygen. Therefore, "in the absence of oxygen" referred to in the present description may be an environment substituted with an inert gas such as nitrogen or an environment in which a substantially oxygen-free state has been created by reacting oxygen with a decomposition product produced during heating.

The reaction time of the heat treatment in the present embodiment is not particularly limited, and it is merely required that fluorination proceeds. For example, the heat treatment is conducted for a time in the range of 1 to 720 minutes, more preferably in the range of 2 to 360 minutes, and still more preferably in the range of 5 to 180 minutes.

In the present embodiment, the activated carbon subjected to the heat treatment can be taken out after cooling to an inert temperature usually equal to or lower than 200°C.

Furthermore, in addition to the above steps, reducing the surface oxide concentration is also known to be effective for further improving the hydrophobicity of the activated carbon. As a method for reducing the surface oxide of the activated carbon, a known method such as conducting a heat treatment in an inert gas atmosphere can be used, whereby acidic functional groups such as phenolic hydroxy groups and carboxyl groups on the surface of the activated carbon can be reduced.

The fluorinated activated carbon obtained as described above is an activated carbon having a BET specific surface area of 500 m²/g or more, wherein in solid-state ¹⁹F-NMR measurement on the activated carbon, a peak derived from ¹⁹F is observed between -100 and - 120 ppm, and fluorine containing organic compounds can be efficiently removed by using the activated carbon.

Furthermore, in the production method of the present embodiment, used activated carbon after being used for removing a perfluoroalkyl compound and/or a polyfluoroalkyl compound can also be used as an activated carbon raw material. In this case, the used activated carbon may be one after ordinary activated carbon (activated carbon not having been allowed to adsorb fluorine containing compounds after activation) is used for removing the perfluoroalkyl compound and/or the polyfluoroalkyl compound.

Specifically, first, activated carbon with a perfluoroalkyl compound and/or a polyfluoroalkyl compound adsorbed thereon is obtained by using non-fluorinated activated carbon for the removal of the perfluoroalkyl compound and/or the polyfluoroalkyl compound. By conducting the heat treatment as described above on the used activated carbon, activated carbon to which fluorine is bonded can be obtained. By heat-treating the activated carbon used for such removal, activated carbon having stronger hydrophobicity can be obtained, and there is an advantage that fluorine introduced into the activated carbon (fluorine bonded to the activated carbon) facilitates adsorption of the perfluoroalkyl compound and/or the polyfluoroalkyl compound.

### (Adsorption filter)

The present embodiment encompasses an adsorption filter including the activated carbon described above. The adsorption filter of the present embodiment is not particularly limited as long as the adsorption filter includes the activated carbon described above, and includes, for example, the activated carbon and a fibrous binder.

The fibrous binder to be used for the adsorption filter of the present embodiment is not particularly limited as long as it can be shaped by entangling the activated carbon, and such fibrous binders can be widely used regardless of being synthetic or natural. Examples of such a binder include acrylic fibers, polyethylene fibers, polypropylene fibers, polyacrylonitrile fibers, cellulose fibers, nylon fibers, aramid fibers, and pulp. The fiber length of the fibrous binder is preferably 4 mm or less.

Two or more types of these fibrous binders may be used in combination. Particularly preferably, polyacrylonitrile fibers or cellulose fibers are used as a binder. Thereby, it is possible to further increase the density of a molded body and the strength of a molded body and to control deterioration in performance.

In the present embodiment, the water permeability of a fibrous polymer binder is preferably approximately 10 to 150 mL in terms of CSF value. The water permeability is more preferably approximately 20 to 110 mL. In the present embodiment, the CSF value is a value measured in accordance with JIS P 8121 (2012) "Pulps-Determination of drainability" "Canadian Standard" freeness method. The CSF value can be adjusted, for example, by fibrillating the binder.

The adsorption filter of the embodiment may contain functional components other than those described above as long as the effect of the present invention is not inhibited. For example, various adsorbents containing silver ions and/or a silver compound for imparting antibacterial properties, silica, zeolites such as titanosilicate, molded diatomaceous earth, and the like for removing metals such as lead and copper may be added in arbitrary amounts, but in this case, they are usually blended in an amount of 0.1 to 30 parts by mass based on the entire adsorption filter.

The mixing ratio of the components in the adsorption filter of the present embodiment is preferably set to approximately 3 to 8 parts by mass of the fibrous binder based on 100 parts by mass of the activated carbon or a mixture of the activated carbon and the functional components from the viewpoint of adsorption effect, moldability, and the like. When the amount of the fibrous binder is less than 3 parts by mass, sufficient strength may not be obtained, and a molded body may not be formed. When the amount of the fibrous binder exceeds 8 parts by mass, adsorption performance may deteriorate. More preferably, 3.5 to 6 parts by mass of the fibrous binder is blended.

The adsorption filter of the present embodiment may be a cylindrical filter further including a core in addition to the activated carbon and the fibrous binder. Adopting a cylindrical shape makes it possible to reduce the water flow resistance, and further, in a case where the adsorption filter is filled in a housing and then used as a cartridge as described later, there is an advantage that the works of loading and exchange of the cartridge in a water purifier can be easily conducted.

The core that can be used in the present embodiment is not particularly limited as long as it can be inserted into the hollow portion of the cylindrical filter to reinforce the cylindrical filter, but the core is preferably, for example, a Trical pipe, a Netron pipe, or a ceramic filter. Furthermore, the core can also be used with a nonwoven fabric or the like wound around the outer periphery of the core.

### (Use, etc. of adsorption filter)

The adsorption filter of the present embodiment is used as, for example, a water purifier filter, a simple water purifying filter, or an air cleaning filter. When the adsorption filter of the present embodiment is used as a water purifier filter, for example, the water purifier filter can be obtained by forming, drying, and then cutting the adsorption filter into a desired size and shape. Furthermore, as necessary, a cap may be attached to the tip portion, or a nonwoven fabric may be attached to the surface.

The adsorption filter of the present embodiment can be used as a cartridge for water purification by being filled in a housing therewith. The cartridge is mounted in a water purifier to be subjected to water passing. As a water-passing method, a total filtration method in which a whole amount of raw water is filtered or a circulation filtration method is adopted. Therefore, the present embodiment also encompasses a water purifier including the adsorption filter.

The cartridge to be mounted in the water purifier in the present embodiment may be used, for example, with the water purifying filter filled in a housing, but the cartridge may be used in combination with a known nonwoven fabric filter, various adsorbents, a mineral additive, a ceramic filtering material, and the like.

Although the present description discloses the techniques of various aspects as described above, main techniques among them are summarized below.

The activated carbon according to the first aspect of the present invention is characterized in that the BET specific surface area is 500 m²/g or more, and a peak derived from ¹⁹F is observed between -100 and -120 ppm in solid-state ¹⁹F-NMR measurement.

The activated carbon according to the second aspect of the present invention is the activated carbon according to the first aspect, wherein a peak derived from ¹⁹F in the solid-state ¹⁹F-NMR measurement is derived from fluorine bonded to the activated carbon.

The activated carbon according to the third aspect of the present invention is the activated carbon according to the first or second aspect, wherein the fluorine content based on 100% by weight of the activated carbon is 0.0001% by weight or more.

The activated carbon according to a fourth aspect of the present invention is the activated carbon according to any one of the first to third aspects that is in a powder form, a granular form, or a pellet-like form.

The activated carbon according to the fifth aspect of the present invention is the activated carbon according to any one of the first to fourth aspects which is used for removing a perfluoroalkyl compound and a polyfluoroalkyl compound.

The adsorption filter according to the sixth aspect of the present invention is an adsorption filter including the activated carbon according to any one of the first to fifth aspects.

The water purifier according to the seventh aspect of the present invention includes the adsorption filter according to the sixth aspect.

The production method according to the eighth aspect of the present invention is a method for producing the activated carbon according to any one of the first to fifth aspects, comprising: subjecting an activated carbon raw material to an activation treatment; allowing the activated carbon raw material subjected to the activation treatment to adsorb a fluorine containing compound; and heat-treating the activated carbon with the fluorine containing compound attached at a temperature equal to or higher than a decomposition onset temperature of the fluorine containing compound.

### Examples

Hereinafter, the present invention will be explained more specifically with reference to Examples, but the present invention is not limited at all by the Examples.

First, each physical property evaluation test method in the examples will be described.

[Measurement of BET specific surface area] Using a nitrogen adsorption amount analyzer "BELSORP-MAX" manufactured by MicrotracBEL Corp., the specific surface area was determined by the BET method for measuring the nitrogen adsorption isotherm of a sample.

[Solid-state ¹⁹F-NMR measurement] Solid-state ¹⁹F-NMR was measured using the following apparatus.

Apparatus: Nuclear magnetic resonance spectrometer manufactured by JEOL Ltd. "ECZ-500R"

### Conditions:

Resonance frequency: ¹⁹F 470 MHz/Probe: 3.2 mm
Measurement mode: MAS (Relaxation Delay = 10s)
Rotation speed: 14 kHz
Measurement temperature: room temperature
BF; 20 Hz

[Content of fluorine] The content of fluorine contained in activated carbon was calculated by automatic combustion ion chromatography.

### (Combustion apparatus)

- Apparatus: Automatic sample combustion apparatus manufactured by Mitsubishi Chemical Analytech Co., Ltd. "AQF-2100H"
- Combustion temperature: 1000°C
- Absorbent: ion exchange water

### (Ion chromatography)

- Apparatus: Ion chromatograph manufactured by Thermo Fisher Scientific Inc. "ICS-2100"
- Separation column: manufactured by Thermo Fisher Scientific Inc. "IonPac AS20"
- Eluent: Aqueous KOH solution
- Column temperature: 35°C

[Activated carbon adsorbent used] The activated carbon raw materials (activated carbons serving as a base) used in the following Examples (Production Examples) are as follows.
- Granular activated carbon manufactured by Calgon Carbon Corporation "F400" (Specific surface area: 1200 m²/g)
- Granular activated carbon manufactured by Kuraray Co., Ltd. "PGW" (Specific surface area: 1400 m²/g)

### <Example 1>

To a 500 ml round-bottom flask, 200 ml of methanol, 2 g of perfluorooctanoic acid and 100 g of activated carbon "F400" manufactured by Calgon Carbon Corporation were added and stirred for 1 hour. Thereafter, heating and pressure reduction were conducted at 60°C and 14 Torr for 5 minutes three times to distill off methanol. The activated carbon thus obtained having 2% by weight of perfluorooctanoic acid adsorbed thereon was further vacuum dried at 80°C for 2 hours, whereby activated carbon with perfluorooctanoic acid adsorbed thereon was produced.

20 g of the obtained activated carbon was placed in a crucible, heated to 900°C at 10°C/min under a nitrogen stream (1 L/min) using a quartz tubular furnace, fired, heat-treated at 900°C for 1 hour, and then cooled to normal temperature by natural cooling. The obtained fluorinated activated carbon weighed 19.6 g and had a specific surface area of 1210 m²/g.

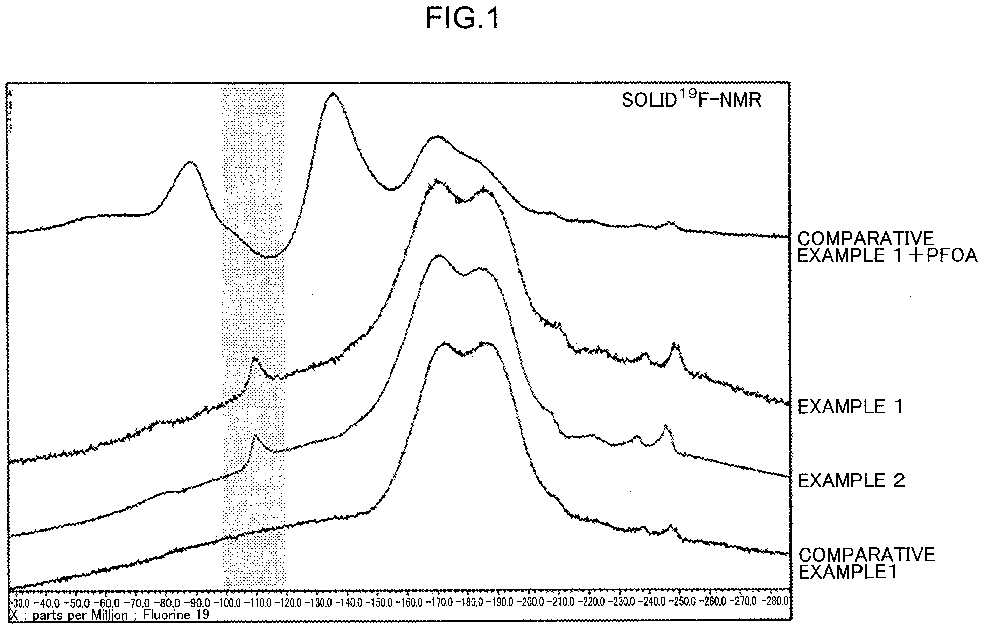

¹⁹F-NMR of the obtained activated carbon was measured by the above-described method, and it was confirmed that there was a peak at a prescribed chemical shift. The result of ¹⁹F-NMR is shown in Fig. 1. The fluorine content of the activated carbon measured by the above-described method was 0.07% by weight.

### <Example 2>

Fluorinated activated carbon was obtained by conducting an experiment in the same manner as in Example 1 except that "PGW" manufactured by Kuraray Co., Ltd. was used as a raw material in place of "F400". ¹⁹F-NMR of the obtained activated carbon was measured by the above-described method, and it was confirmed that there was a peak at a prescribed chemical shift. The result of ¹⁹F-NMR is shown in Fig. 1. The activated carbon had a fluorine content of 0.002% by weight and a specific surface area of 1380 m²/g as measured by the methods described above.

### <Example 3>

The procedure was conducted in a similar manner to that in Example 1 except that the firing temperature was changed to 700°C and the firing time was changed to 3 hours in Example 1. The specific surface area was 1200 m²/g.

¹⁹F-NMR of the obtained activated carbon was measured by the above-described method, and it was confirmed that there was a peak at a prescribed chemical shift (between -100 to -120 ppm). The fluorine content of the activated carbon measured by the above-described method was 0.11% by weight.

### <Comparative Example 1>

Non-fluorinated "F400" was used.

### <Comparative Example 2>

Non-fluorinated "PGW" was used.

In Comparative Examples 1 and 2, no fluorine was detected by both ¹⁹F-NMR measurement and combustion ion chromatography. In Fig. 1 are shown the results of ¹⁹F-NMR measurement in Comparative Example 1 and Reference Example in which perfluorooctanoic acid (PFOA) was merely added to Comparative Example 1. When PFOA was merely added to Comparative Example 1, no fluorine peak in ¹⁹F-NMR was observed at the prescribed position in the present embodiment.

### <Evaluation method>

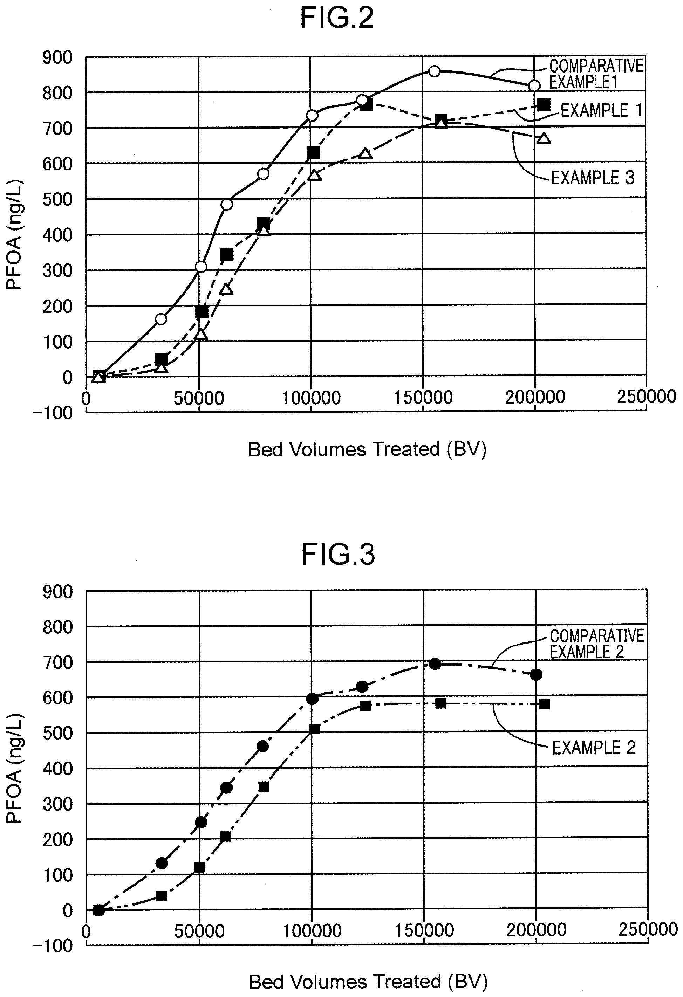

The effect of removing perfluorooctanoic acid (PFOA) was evaluated for the activated carbons of Examples 1 to 3 and Comparative Examples 1 to 2. Five columns consisting only of the activated carbons of Examples 1 to 3 and Comparative Examples 1 to 2, respectively, were prepared in accordance with ASTM D 6586. The test was conducted in accordance with EPA Method 537 Version 1.1 "Methodology", by which the adsorption of pollutants to granular activated carbon in a water system is measured by means of a Rapid Small Scale Column Test (RSSCT) prepared as described above. The fed water passed through the column. The perfluorooctanoic acid concentration at the outlet was measured at specified intervals, and the ability to remove the compound was evaluated. To normalize the size of the bed, the results were expressed by "bed volume", which was calculated by dividing the amount of the water that passed through the activated carbon bed by the volume of the bed itself. The results of Example 1, Example 3, and Comparative Example 1 are shown in Fig. 2, and the results of Example 2 and Comparative Example 2 are shown in Fig. 3.

### (Discussion)

As is apparent from the results of Figs. 2 and 3, the fluorinated activated carbons of Examples were lower in perfluorooctanoic acid concentration at the outlet than the untreated activated carbons of Comparative Examples, and were superior in the ability to remove the compound. Further, it was also found that the activated carbons of Examples can maintain the superior removal ability longer than the activated carbons of Comparative Examples.

This application is based on Japanese Patent Application No. 2023-193657 filed on November 14, 2023, the contents of which are included in the present invention.

In order to describe the present invention, the present invention has been appropriately and sufficiently described through the embodiments with reference to the specific examples in the above, but it should be recognized that those skilled in the art can easily modify and/or improve the above-described embodiments. Therefore, as long as modifications or improvements carried out by a person skilled in the art do not depart from the scope of the claims described in the patent claims of the present invention, these modifications or improvements are interpreted as being encompassed by the scope of the claims.

### Industrial Applicability

The present invention has wide industrial applicability in technical fields related to activated carbon, a method for producing the same, an adsorption filter, water purification, etc. including activated carbon.

## Claims

1. Activated carbon having a BET specific surface area of 500 m²/g or more, wherein in solid-state ¹⁹F-NMR measurement on the activated carbon, a peak derived from ¹⁹F is observed between -100 and -120 ppm.

2. The activated carbon according to claim 1, wherein a peak derived from ¹⁹F in the solid-state ¹⁹F-NMR measurement is derived from fluorine bonded to the activated carbon.

3. The activated carbon according to claim 1, wherein a fluorine content based on 100% by weight of the activated carbon is 0.0001% by weight or more.

4. The activated carbon according to claim 1, wherein the activated carbon is in a powder form, a granular form, or a pellet-like form.

5. The activated carbon according to claim 1, wherein the activated carbon is used for removing a perfluoroalkyl compound and a polyfluoroalkyl compound.

6. An adsorption filter comprising the activated carbon according to any one of claims 1 to 5.

7. A water purifier comprising the adsorption filter according to claim 6.

8. A method for producing the activated carbon according to any one of claims 1 to 5, comprising:
subjecting an activated carbon raw material to an activation treatment;
allowing the activated carbon raw material subjected to the activation treatment to adsorb a fluorine containing compound; and
heat-treating the activated carbon with the fluorine containing compound attached at a temperature equal to or higher than a decomposition onset temperature of the fluorine containing compound.
